# EUROPEAN PATENT APPLICATION

(11) **EP 4 693 133 A2**
(43) Date of publication of application: **11.02.2026**
(21) Application number: 24785419.3
(22) Date of filing: 04.04.2024
(51) Int. Cl.: G06Q 10/10, G06Q 10/06, G06Q 50/10, G06Q 50/50, G06F 40/58, G06F 16/332, G06F 40/35, G10L 15/26, G10L 15/22

(54) **MIND-MAP-BASED COLLABORATION SYSTEM AND METHOD FOR PROVIDING REAL-TIME TRANSLATION FUNCTION**

(30) Priority: 04.04.2023 KR 20230043976; 21.06.2023 KR 20230079757
(71) Applicant: Chung, Young Gyo, Seoul 02535 (KR)
(72) Inventor: Chung, Young Gyo, Seoul 02535 (KR)
(74) Representative: Cabinet Chaillot
(86) International application number: PCT/KR2024/095685
(87) International publication number: WO 2024/210730

(57) **Abstract**

The present invention suggests mind map-based online collaboration system and method that provide a real-time translation function.

## Description

### Technical Field

The present invention relates to a mind map-based collaboration system and method that provide real-time translation functionality.

### Background Art

Discussion is a creative brain activity process where participants communicate with each other to find solutions and achievement strategies for a given problem or goal. Thinking capabilities and procedures required for discussion differ from processes like lectures and learning, which involve one-way transmission or acquisition of information. For an effective discussion to occur, a series of steps must be followed, such as understanding of a current state of a given topic, identifying of causes, and establishing of countermeasures. During this process, participants should be able to react to ideas presented by others and to share their own thoughts in real time.

Therefore, while translation APIs provided by Google and Naver are currently used in various programs, these translation functions have only been utilized for sequentially translating text or speech. In a cloud-based digital era ushered in by the Fourth Industrial Revolution, people live in an innovative technological environment where instantaneous connection and communication with anyone worldwide is possible. However, language barriers have prevented people of general level from freely communicating and mutually understanding each other in real-time online discussions on specific topics.

Further, when people from multicultural and multinational backgrounds wish to discuss a certain topic online in real time, they must rely on interpretation or translation tools if they cannot use or freely speak an official language like English. Particularly, a process of exchanging ideas, following a series of steps, and collaborating to reach a consensus has proved extremely difficult for ordinary people without specialized education or training.

### Disclosure of Invention

### Technical Problem

The object of the present invention is to provide a mind map-based online collaboration system and method that technologically combines separate solutions to two problems of language and procedure that arise in real-time online discussions between multilingual users, and includes ability to translate into multiple languages in real time.

### Solution to Problem

According to one aspect of the present invention to achieve the above object, the present invention may provide a mind map-based online collaboration system providing a real-time translation function, the system comprising: a plurality of author terminals creating and editing a collaborative mind map according to a collaboration topic; a server opening a conference room by receiving the mind map transmitted from any one of the plurality of author terminals, transmitting the received mind map to other author terminal participating in the opened conference room, and receiving mind map configuration information transmitted from any one of the author terminals participating in the conference room and transmitting the received information to all of the author terminals participating in the conference room; and a translation API connected to the server via a network and generating and outputting at least one translation data for an entered language data, wherein a language entered and edited via any one of the plurality of author terminals is translated in real-time in a language set by other author terminal participating in the conference room.

Further, according to one aspect of the present invention, the present invention may provide a mind map-based online collaboration system providing a real-time translation function by using a plurality of author terminals and a server which are connected via a network, the system comprising: an initiator terminal, which is any one of the plurality of author terminals, the initiator terminal generating a mind map according to a collaboration topic and requesting to open a conference room by accessing the server; at least one participant terminal, which is other than the initiator terminal among the plurality of author terminals, the at least one participant terminal accessing the server and participating in the conference room after participant authentication; and a server entering a message for collaboration in a language set by the initiator terminal or the at least one participant terminal participating in the conference room, and updating and outputting an entered mind map to the initiator terminal or the at least one participant terminal, wherein when there is the initiator terminal or the at least one participant terminal that sets a language different from the entered language, the server performs and outputs real-time translation into the different language set by the initiator terminals or the at least one participant terminals, with interacting with a translation API.

Further, according to another aspect of the present invention, the present invention may provide a mind map-based online collaboration method providing a real-time translation function by using a plurality of author terminals and a server which are connected via a network, the method comprising: a mind map generation step for generating a mind map according to a collaboration topic via an initiator terminal, which is any one of the plurality of author terminals; a conference room opening request step for requesting to open a conference room by accessing the server via the initiator terminal, and setting conference room setting information; a conference room participation step for accessing the server and participating in the conference room after participant authentication, via at least one participant terminal other than the initiator terminal among the plurality of author terminals; an input step for entering a message for collaboration in a set language by the initiator terminal or the at least one participant terminal participating in the conference room, and transmitting the message to the server; and
an output step for updating and outputting, by the server, a mind map entered by the input step to the initiator terminal or the at least one participant terminal, wherein when there is the initiator terminal or the at least one participant terminal that sets a language different from the language entered via the input step, the server performs and outputs real-time translation into the different language set by the initiator terminals or the at least one participant terminals, with interacting with a translation API.

Further, in the mind map-based online collaboration method providing the real-time translation function according to another aspect of the present invention, in the output step, the server may check an output mode which is set by the initiator terminal or the at least one participant terminal, and may output a translated text or an original text according to the output mode.

Further, in the mind map-based online collaboration method providing the real-time translation function according to another aspect of the present invention, the input step may input a text, and may input a mind map node by automatically converting a user's voice to the text, instead of inputting the text.

Further, in the output step of the mind map-based online collaboration method providing the real-time translation function according to another aspect of the present invention, when a mouse hovers over a node of the mind map via the author terminal, the server may display and output a name of an author terminal which creates the corresponding node of the mind map, a profile picture, and a language which is used.

Further, in the output step of the mind map-based online collaboration method providing the real-time translation function according to another aspect of the present invention, when the mouse hovers over a node of the mind map created by other participant, via any one of the plurality of author terminals, the server may display the node in a language set by the other participant, and when the node is clicked, the server may read and output the node in the corresponding language by interacting with the translation API.

Further, in the output step of the mind map-based online collaboration method providing the real-time translation function according to another aspect of the present invention, the server may allow words or sentences entered in a node created by any one of the plurality of author terminals, to be internet-searched or dictionary-searched by pressing a particular key to identify an actual meaning.

Further, in the output step of the mind map-based online collaboration method providing the real-time translation function according to another aspect of the present invention, the server may assign a unique color to each user of the plurality of author terminals which participate in an online collaboration mind map, and when a user is selected from a list of participants, the server may display and output a unique color of the user as a background color of a node.

Further, in the output step of the mind map-based online collaboration method providing the real-time translation function according to another aspect of the present invention, the server may numerically indicate and output a number of creation and a number of edit by each user in a list of participants such that a degree of participation in online collaboration among the plurality of author terminals is easily recognized.

Further, in the output step of the mind map-based online collaboration method providing the real-time translation function according to another aspect of the present invention, the server may store data in a mind map format and may output the data in the mind map format or in a note format by switching an output mode, and the server may convert data in a state displayed on a screen into other file formats and saves the converted data.

Further, in the output step of the mind map-based online collaboration method providing the real-time translation function according to another aspect of the present invention, the server may output a writing of a desired number of pages in cooperation with an artificial intelligence API based on a hierarchical content of the mind map.

Further, in the mind map-based online collaboration method providing the real-time translation function according to another aspect of the present invention, the author terminal may transmit a message via chat or whisper to any one of the plurality of author terminals participating in the conference room, and when the message is received by an author terminal that sets a language different from the language in which the message is entered, the server, in cooperation with the translation API, may perform and output the real-time translation into the language set by the author terminal receiving the message.

Further, in the mind map-based online collaboration method providing the real-time translation function according to another aspect of the present invention, the server, when saving the mind map after completion of creating the mind map, may chronologically store an order in which all nodes are added, deleted, and edited after collaboration via a collaborative mind map is initiated, and may output stored data as a video.

Further, in the mind map-based online collaboration method providing the real-time translation function according to another aspect of the present invention, when a node is added to a collaborative mind map, supplementary explanatory materials (documents, pictures, videos, URLs, etc.) related to the node may be shared in real-time by hyperlinking the materials to the node.

### Advantageous Effects of Invention

According to the present invention, when a participant accesses a mind map opened on the server during a discussion, and enters his or her thoughts in speech or writing using his or her own everyday language, the thoughts are translated into the other party's language in real time through an automatic translation API, core concepts shared during the discussion are organized in a visual and structured form, and the overall flow of the discussion are understood, such that the discussion can be conducted efficiently.

### Brief Description of Drawings

FIG. 1 is a schematic block diagram of a mind map-based collaboration system providing real-time translation function according to an embodiment of the present invention.
FIGS. 2 and 3 are diagrams illustrating a mind map-based collaboration method providing real-time translation function according to the embodiment of the present invention.
FIG. 4 is a diagram illustrating an opening of a collaboration and a participation status in the mind map-based collaboration system providing the real-time translation function according to the embodiment of the present invention.
FIG. 5 is a diagram illustrating an implementation screen of collaboration in the mind map-based collaboration system providing the real-time translation function according to the embodiment of the present invention.
FIG. 6 is a diagram illustrating a real-time translation display in the mind map-based collaboration system providing the real-time translation function according to the embodiment of the present invention.
FIG. 7 is a diagram illustrating information provided when a mouse hovers over a mind map node in the mind map-based collaboration system providing the real-time translation function according to the embodiment of the present invention.
FIG. 8 is a diagram illustrating a search function for an entered word or sentence in the mind map-based collaboration system providing the real-time translation function according to the embodiment of the present invention.
FIG. 9 is a diagram illustrating a function for identifying a participating user in the mind map-based collaboration system providing the real-time translation function according to the embodiment of the present invention.
FIG. 10 is a diagram illustrating a function of displaying an actual entered language through an original version view in the mind map-based collaboration system providing the real-time translation function according to the embodiment of the present invention.
FIG. 11 is a diagram illustrating a function of converting and displaying a map format into a note format in the mind map-based collaboration system providing the real-time translation function according to the embodiment of the present invention.
FIG. 12 is a diagram illustrating a bi-directional mode switching screen in the mind map-based collaboration system providing a real-time translation function according to an embodiment of the present invention.
FIG. 13 is a diagram illustrating a function for converting into and saving as a file such as a Word or PowerPoint file in the mind map-based collaboration system providing the real-time translation function according to the embodiment of the present invention.
FIG. 14 is a diagram illustrating a state of progress for discussion in the mind map-based collaboration system providing the real-time translation function according to the embodiment of the present invention.
FIG. 15 is a diagram illustrating another embodiment in which the mind map-based collaboration system providing the real-time translation function according to the embodiment of the present invention can be utilized in a trade work of an import-export company.

### Best Mode for Carrying out the Invention

The object and technical configuration of the present invention and the operations and advantages thereby will be more clearly understood from the detailed description with reference to the accompanying drawings in the specification of the present invention.

The terms used in this specification are used merely to describe particular embodiments and are not intended to limit the present invention. For example, the terms such as "comprising" or "including" as used herein should not be construed as necessarily including all of the various components or steps described in the invention, but rather as not including some of the components or some of the steps, or as including additional components or steps. In addition, singular expressions used herein include the plural unless the context clearly indicates otherwise.

Hereinafter, the present invention will be described in detail by describing preferred embodiments of the present invention with reference to the accompanying drawings. The embodiments described herein are provided to facilitate understanding of the technical concepts of the present invention by those skilled in the art, and should not be construed as limiting the invention, and it will be appreciated that embodiments of the present invention may have a variety of applications to those of ordinary skill in the art.

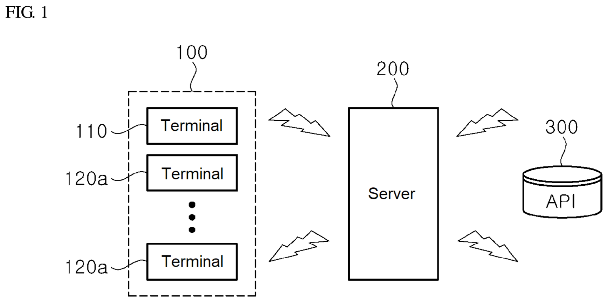

Referring to FIGS. 1-14, a mind map-based collaboration system and method for providing a real-time translation function will be described.

Referring to FIGS. 1-5 first, a mind map-based online collaboration system according to the present invention may include at least one author (or creator) terminal 100, a server 200, and a translation API 300, and the author terminal 100, the server 200, and the translation API 300 may be connected via a network for communicating with one another.

The author terminal 100 may access the server 200 of the mind map-based online collaboration system to create a mind map, and such an author terminal 100 may be implemented using a personal information and communication device having a data communication function over a network, such as a personal computer, a laptop, a mobile phone, or the like.

Further, the author terminal 100 according to the present invention may be categorized or classified into an initiator (or establisher) terminal 110 and a participant terminal 120 with respect to an opening of a meeting (or conference) room for collaboration through a mind map.

A method for opening and participating in the collaboration will be briefly described. The initiator terminal 110 first posts or uploads to the cloud server 200, a mind map to be used for online discussion.

A collaboration link or invitation email is then sent to people who will participate in the discussion.

Participants then conduct the collaboration by inputting thoughts and sharing materials through a real-time mapping by speaking or writing.

During the collaboration, each participant's input is translated and displayed in real time as it is delivered to other participants.

More specifically, in the mind map-based online collaboration method according to the present invention, the initiator terminal 110 creates the mind map (S200) according to a collaboration topic for which the mind map is to be created under the control of the author, and requests an opening of a conference room (S202) with the corresponding topic by accessing the server 200. The initiator terminal 110 uploads the created mind map to the server 200, and at the same time, sets various setting information of the conference room (a name of the conference room, a password, an administrator authority setting, a conference opening time, a conference time, and the like), while requesting the opening of the conference room to the server 200. When these conference room opening settings are completed (S204), the server 200 opens the conference room and enables the participant terminal 120 to participate in the conference room (S206).

At this time, the server 200 may be configured to notify the author who is set as the participant of conference room opening information (a conference topic, a conference opening time, and the like) by email or text message, using conference room participant information (an email address, a mobile phone number, and the like) transmitted from the initiator terminal 110.

Further, the server 200 may be a cloud server.

The technique itself for notifying the conference room opening information using email or text message utilizes techniques already known in the art, and thus will not be described in further detail.

The participant terminal 120 accesses the server 200 via the network in accordance with the operation of the participant, and joins the conference room.

At this time, if a password is set for the conference room, the participant must operate the participant terminal 120 to enter the set password to participate in the conference room. When the participant authentication of the participant terminal 120 is completed (S208), the server 200 transmits the mind map that is transmitted from the initiator terminal 110 and then stored, to the participant terminal 120 (S210), and transmits the participant's information to the initiator terminal 110 and to other participant terminals 120 (S212). Through such a process, a plurality of participant terminals 120 participate in the conference room opened by the request of the initiator terminal 110, and when the set conference start time is reached or when there is a conference start request from the initiator terminal 110 (S214), the mind map creation process by the initiator terminal 110 and the plurality of participant terminals 120 participating in the conference room, starts (S216).

When the mind map creation process starts, if the plurality of participant terminals 120 and the initiator terminal 110 use different languages (S220), the server 200 may provide a real-time translation function utilizing the translation API 300 (S222).

The server 200 checks or confirms a language inputted via the author terminal 100 (S310) and checks or confirms a set language for an output target terminal (S320).

At this time, if the set languages between the plurality of author terminals 100 are different, the real-time translation may be performed via the translation API 300, and the server 200 may check whether an output target mode is an original text viewing mode or a translated text viewing mode (S340) and may output the original text or the translated text according to the set mode (S350).

Therefore, a language barrier that occurs in real-time online discussions between multilingual users may be solved, and since relationship between information may not be expressed and communicated by simply arranging information in a form of a list, a foundation for grasping an overall context and thinking freely may be provided by easily expressing structures and relationships of information visually and logically through the mind map by anyone.

In addition, the mind map-based online collaboration system and method according to the present invention may enable information sharing and logical intellectual activities through the real-time collaboration based on mapping, unlike the information sharing through messengers or bulletin boards.

Further, the mind map-based online collaboration system and method according to the present invention may perform efficient discussion by translating one's own thoughts into the other party's language in real time through the automatic translation API 300 when a participant accesses the mind map opened on the server during the discussion and enters such thoughts in speech or writing using one's own everyday language, organizing core concepts shared during the discussion in a visual and structured form, and allowing an overall flow of the discussion to be grasped.

The author terminal 100 may be provided with a mind map client program, and the mind map client program may include a communication module 101 and a mind map control module 102.

The communication module 101 connects the author terminal 100 to the server 200 via the network to perform data communication.

In addition, the mind map control module 102 may perform a function of entirely controlling the creation/editing of the mind map according to the author's input.

The server 200 according to the present invention may be provided with a logically implemented mind map program 210, and may include a communication module 220, a mind map control module 230, a mind map update module 240, and a storage module 250.

The communication module 220 of the server is connected to at least one author terminal 100 connected or accessed via a network, receives mind map configuration information transmitted from the author terminal 100, and transmits such information to other author terminals 100.

That is, the communication module 220 may relay the transmission and reception of the map configuration information between a plurality of author terminals 100 connected via the network.

The mind map control module 230 may interpret the map configuration information received through the communication module 220 of the server and may output such information to the mind map update module 240.

When the mind map is created and edited through each author terminal in real time, the mind map update module 240 updates and outputs a changed mind map.

At this time, when the mind map is created through the plurality of author terminals, the mind map created in a plurality of user languages may be output as a translated content in the language according to the user settings in the author terminal 100 by providing the translation function in real time using the translation API 300 through the communication module 220 from the mind map update module 240.

The storage module 250 may store the output data and the data of the created and edited mind map, and may store information for participant authentication of the author terminal.

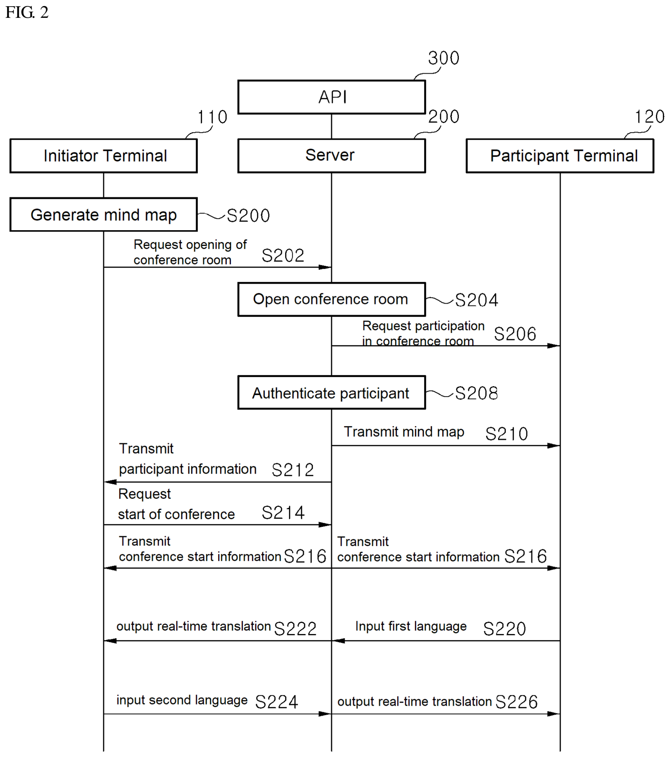

Referring now to FIG. 2, a mind map-based online collaboration method providing the real-time translation function according to the present invention may include: a mind map generation step (S200) for utilizing a plurality of author terminals and a server connected via a network, and generating a mind map according to a collaboration topic via an initiator terminal, which is any one of the plurality of author terminals; a conference room opening request step (S202) for requesting to open a conference room by accessing the server via the initiator terminal 110 and setting conference room setting information; a conference room participation step (S209) in which the server 200 opens the conference room (S204), and at least one participant terminal, other than the initiator terminal among the plurality of author terminals, accesses the server and participates in the conference room after participant authentication (S208); input steps (S220, S224) entering a message for collaboration in a set language by the initiator terminal or the at least one participant terminal participating in the conference room and transmitting the message to the server; and
output steps (S222, S226) in which the server 200 updates and outputs a mind map entered by the input step (S220, S224) to the initiator terminal 110 or the at least one participant terminal 120, wherein when there is the initiator terminal 110 or the at least one participant terminal 120 that has set a language different from the language entered via the input step, the server 200 may interact with the translation API 300 to perform and output the real-time translation into the different language set by the initiator terminals 110 or the at least one participant terminals 120.

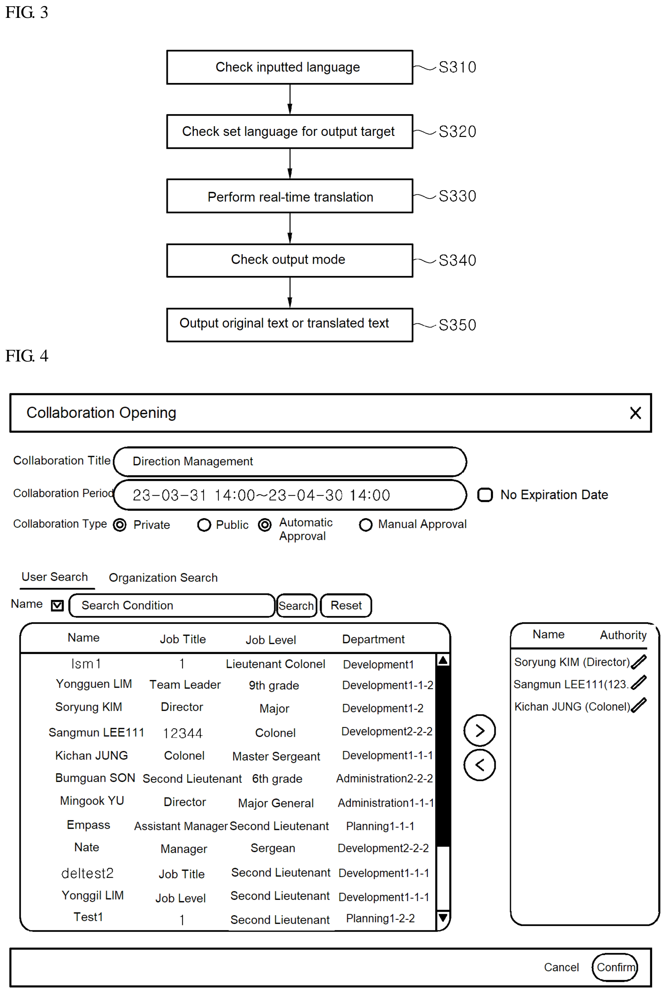

As shown in FIG. 3, the server 200 checks or confirms the language inputted or entered via the author terminal 100 (S310) and checks the set language for the output target terminal (S320).

At this time, if the set languages of the plurality of author terminals 100 are different, the server 200 may perform the real-time translation via the translation API 300, may check whether the output target mode is the original text viewing mode or the translated text viewing mode (S340), and may output the original text or the translated text (S350) according to the set mode.

That is, in the output steps (S222, S226), the server 200 may check the output mode which is set by the initiator terminal 110 or the at least one participant terminal 120, and may output the translated text or the original text according to the output mode.

Further, in the input steps (S220, S224), the initiator terminal 110 or the at least one participant terminal 120 may input a text, and may input a mind map node by automatically converting the user's voice to text, instead of inputting the text.

Further, as shown in FIG. 4 that indicates the opening of the collaboration and the participation status in the mind map-based collaboration system providing the real-time translation function according to the embodiment of the present invention, the users of the plurality of author terminals participating in the conference room may be identified and displayed.

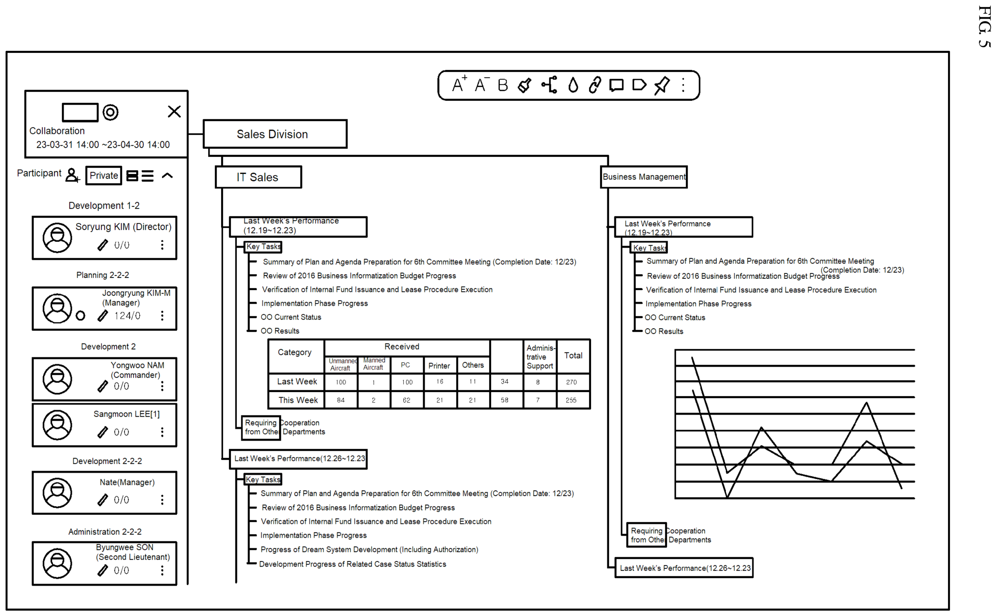

Further, as shown in FIG. 5 which illustrates a screen representing the implementation of the collaboration in the mind map-based collaboration system providing the real-time translation function according to the embodiment of the present invention, the collaboration topic and the participant information may be displayed.

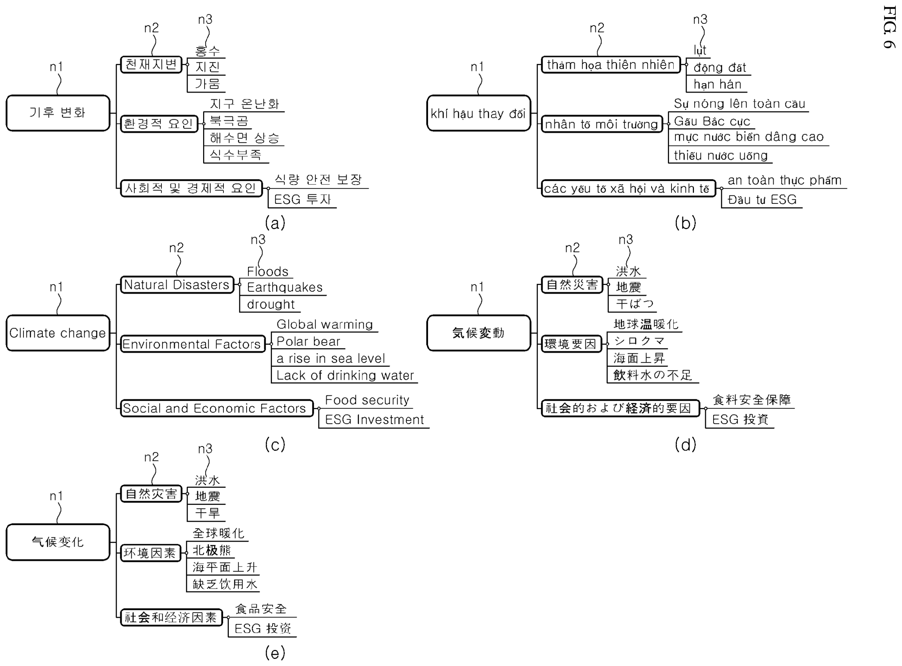

Further, as shown in FIG. 6, while the plurality of users participate in the single conference room and collaboratively create the mind map through the network centering on the mind map server, a mind map screen displayed to the user may be translated in real time into the language that the user has set (or a default language of a browser), even though each participant inputs in a different language.

Further, FIG. 6 discloses, for example, jointly creating of the mind map using five or more different languages at the plurality of author terminals 100, and shows that the mind map may be output and displayed in the language set on the author terminals 100.

Further, a text may be entered through an input device (not shown) such as a keyboard or a mouse on the author terminal 100, and a mind map node may be entered by automatically converting the user's voice into text instead of entering the text.

The mind map collaboration may be displayed in the language set by the author terminal, and a font size or color may be displayed differently for each node n1, n2, n3.

FIG. 6(a) shows an output in Korean, FIG. 6(b) shows an output in Vietnamese, FIG. 6(c) shows an output in English, FIG. 6(d) shows an output in Japanese, and FIG. 6(e) shows an output in Chinese.

Thus, even if the mind map is created in the different languages on the plurality of author terminals, the mind map may be output in the set language.

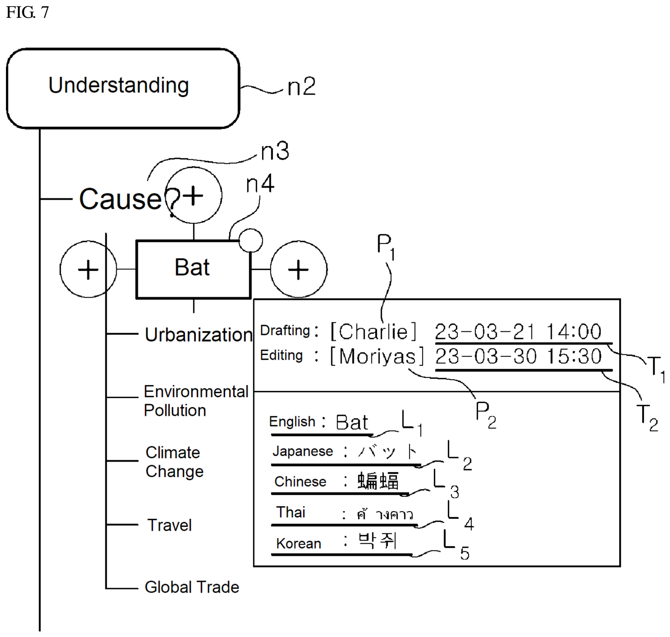

Also, referring to FIG. 7 to FIG. 9, a function of displaying an author's name P1, a profile picture, and a language L1 to L5 when a mouse hovers over each node of the mind map, may be included.

Moreover, each node may display a time T1 at which it was created via the author terminal and a time T2 at which it was modified via the author terminal.

Therefore, an advantage of identifying when the node was created or modified is provided.

In addition, when the mouse hovers over the node of the mind map authored by other participants, the node is displayed with texts (i.e., words or sentences) in the languages of such other participants except for the language of the user manipulating the mouse, and when the user clicks on one of the texts, the clicked text is read in the corresponding language to perform foreign language learning.

For example, in the collaboration in which three users speaking Korean, English, and Chinese participate, "bat" entered by the English user on the Korean user's screen is automatically translated to " 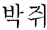 ." When the Korean user hovers the mouse over the " 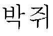 " node on his or her own screen, the English and Chinese words for " 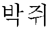 " may be displayed.

If the participants other than Korean users speak four languages, the four language words for " 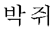 " are displayed in a list.

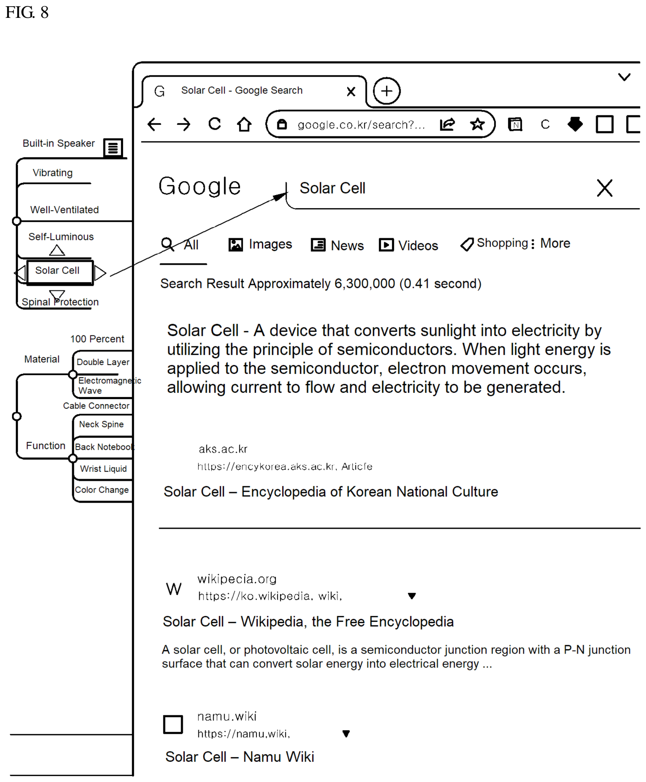

Further, as also shown in FIG. 8, the present invention may include a function that allows the words or sentences entered in each node to be internet-searched or dictionary-searched by pressing a particular key (e.g., F9) to identify an actual meaning.

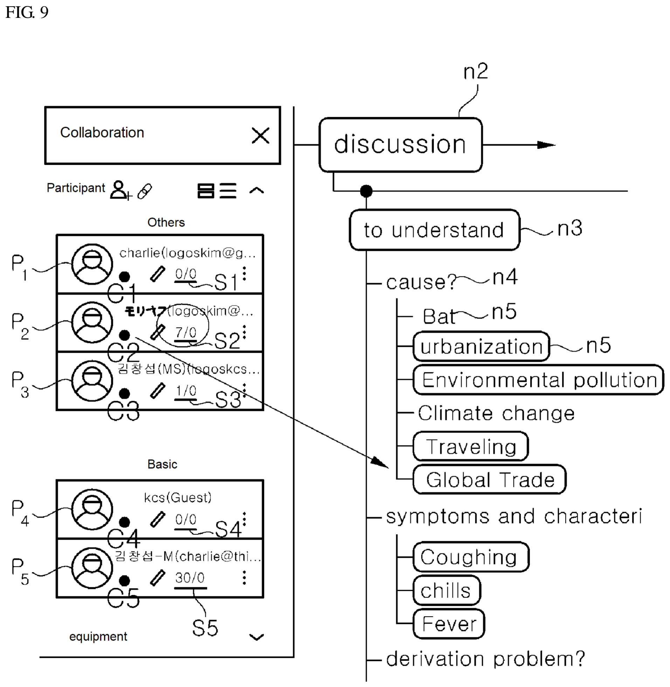

Further, as shown in FIG. 9, the present invention may include a function to assign a unique color C1 to C5 to each user P1 to P5 who participated in the collaborative mind map, and to display the color unique to the user at the node n5 entered by the user as the background color when the user is selected from the list of participants, so that who authored how much contents may be identified at a glance.

In the list of participants, 7/0 means a number of creation 7 and a number of edit 0 by each user, and may be easily understood by displaying the degree of participation.

That is, in outputting from the server 200, the number of creation and the number of edit by each user may be numerically expressed in the list of participants so that the degree of participation in the online collaboration among the plurality of author terminals may be easily recognized.

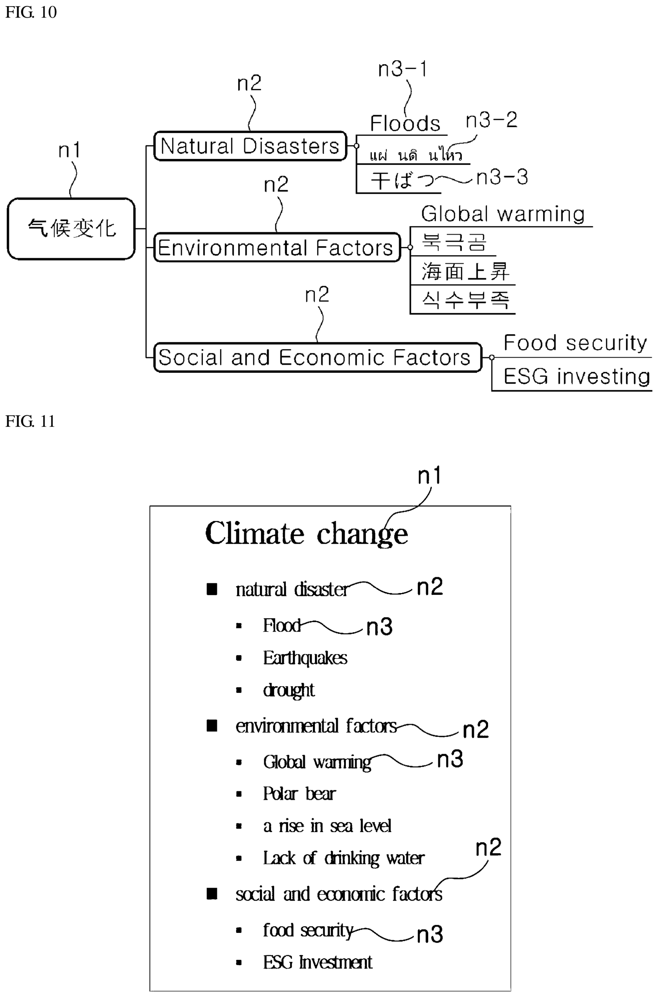

Further, as shown in FIG. 10, the present invention may include a function to view the collaborative mind map in the actual input language by clicking an original version view menu (not shown).

That is, the server 200 may check the output mode set by the initiator terminal or the at least one participant terminal at the time of output, and may output the translated text or the original text according to the output mode.

This has an advantage of checking the degree of participation and of learning translations for corresponding words by identifying the language in which the mind map was created.

Further, as shown in FIG. 11, a mode may be switched or converted to display contents in a normal note format other than a map format, on a cell phone (a mobile phone) or other devices with a small screen.

Identification of the nodes n1-n3 in the map format is accomplished by varying a size of shape, i.e., a size of bullet so that main (or upper) items and sub (or lower) items may be identified.

That is, the shape of the node n1, which is an upper node, may be large, and the shape of the nodes n2 and n3, which are lower nodes, may be sequentially output into smaller sizes.

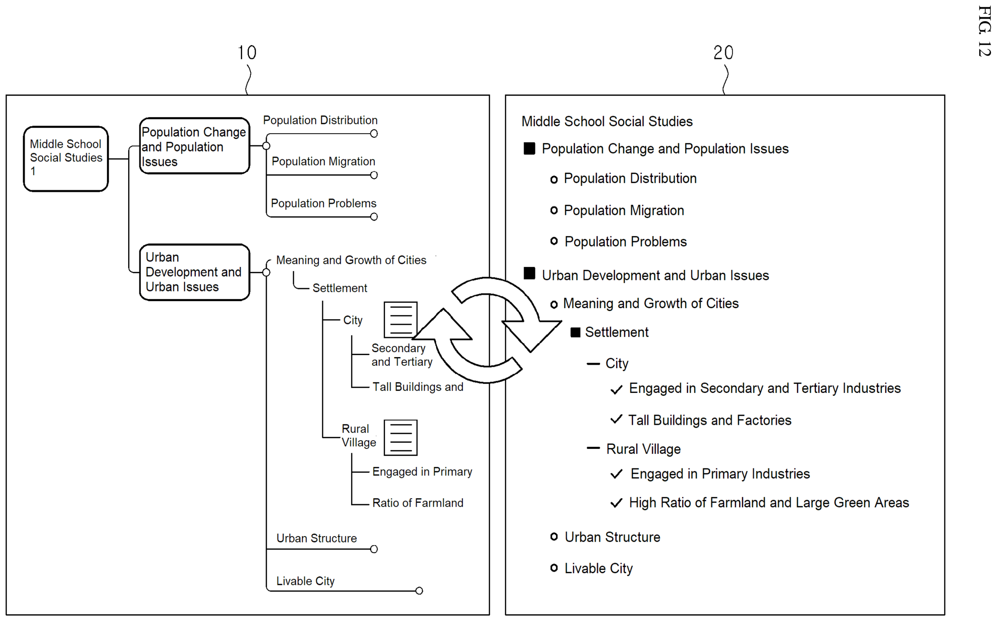

Further, as shown in FIG. 12, data in the mind map format may be converted to data in the note format, and data in the note format may also be converted to data in the mind map format, so that the user may output the data in the desired format.

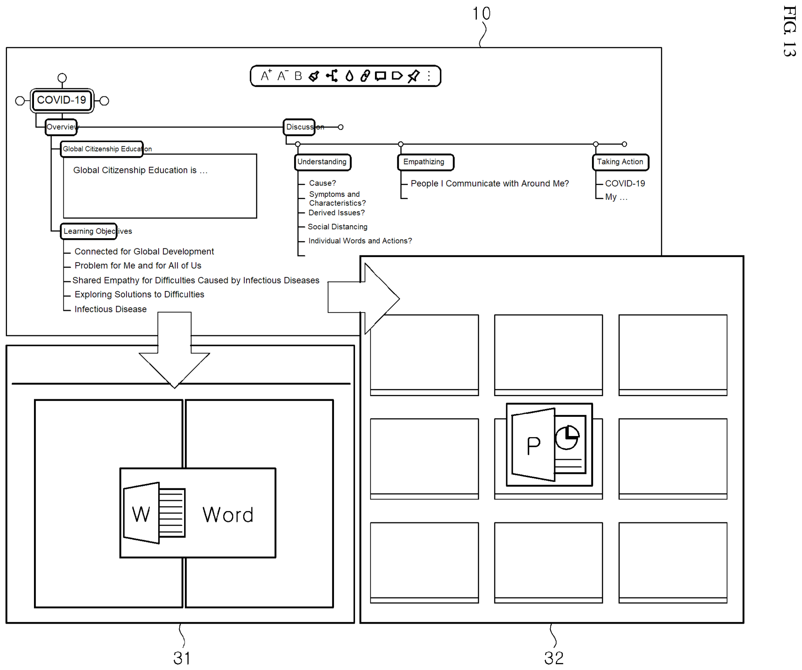

Further, as shown in FIG. 13, the present invention may include a function to convert finally organized contents as in the state of language displayed on the screen into a document of Word, PowerPoint, Hangul, or the like.

That is, the server 200 of the mind map-based collaboration system providing the real-time translation function according to the present invention may store data in the mind map format, output the data in the mind map format or in the note format by switching the output mode, and convert the data in the state displayed on the screen into other file formats and save the converted data .

In addition, when the user presses a writing button and enters a desired number of pages, it is possible to automatically output a writing with a desired number of pages by utilizing an artificial intelligence such as GPT based on hierarchical contents of a current mind map.

That is, the server 200 of the mind map-based collaboration system that provides the real-time translation function according to the present invention may output the writing of the desired number of pages in cooperation with the artificial intelligence API based on the hierarchical content of the mind map.

Further, the present invention may include a function to display images of people currently participating in the collaborative mind map, and may include a chat or whisper message function in which the automatic translation is applied by selecting a specific person among the current participants.

That is, in the mind map-based collaboration system providing the real-time translation function according to the present invention, the author terminal may send a message via chat or whisper to any one of the plurality of author terminals participating in the conference room, and if the message is received by the author terminal that has set the language different from the language in which the message was entered, the server 200 may, in cooperation with the translation API, perform and output the real-time translation into the language set by the author terminal receiving the message.

In addition, in saving the mind map after completing the creation of the mind map, the present invention may include a function that saves all the nodes created after the collaboration through the collaborative mind map started, in a chronological order in which they were added/deleted/edited, and then creates and plays such nodes as a video by pressing a video creation menu.

That is, in the mind map-based collaboration system providing the real-time translation according to the present invention, the server 200, when saving the mind map after completion of creating the mind map, may chronologically or sequentially store the order in which all nodes have been added, deleted, and edited since collaboration via the collaborative mind map was initiated,
and may output the stored data as a video.

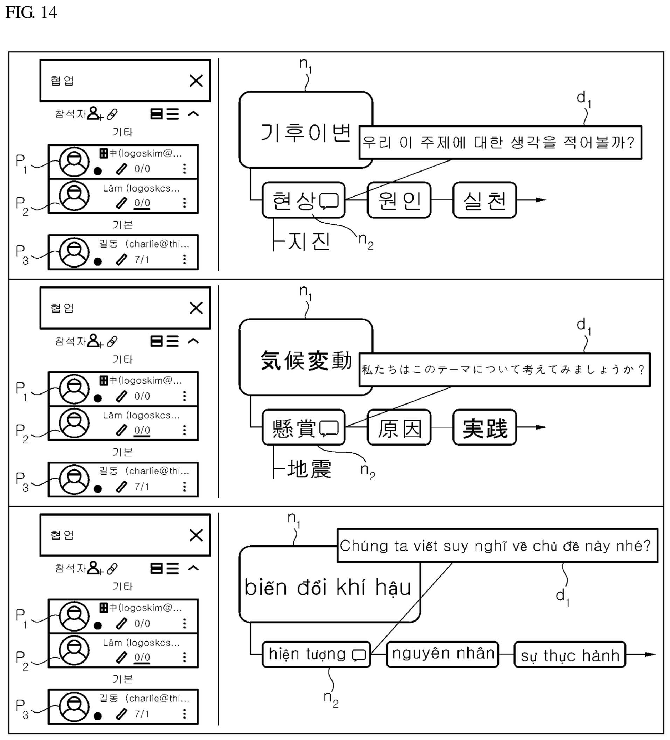

Further, as shown in FIG. 14, as an example of application, the mind map-based collaboration system and method providing the real-time translation function according to the present invention may be utilized for team-based online project activities in a multicultural classroom.

First, the procedure is as follows: ① A Korean student becomes an initiator, creates a center title n1 of " 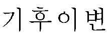 " in Korean and first-level branches n2 of " 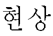 " " 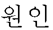 ," and " 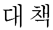 " in Korean, and invites Japanese and Vietnamese students.

② When the Japanese student joins the collaboration, " 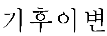 " n1 is displayed in his or her own language, Japanese.

In addition, when the Vietnamese student joins the collaboration, " 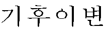 " n1 is displayed in his or her own language, Vietnamese.

③ When the Korean student enters "Let's write down our thoughts on this topic?" d1 on the map, the translated branches d1 in their own languages are displayed on the screens of the Japanese and Vietnamese students, respectively.

④ The three students begin to enter their thoughts in their own language on the map, and ⑤ the input contents are translated in real time so that all three students can share their thoughts in their own languages.

Further, in the mind map-based collaboration method providing the real-time translation function according to the present invention, when a node is added to a collaborative mind map through each author terminal, supplementary explanatory materials (documents, pictures, videos, URLs, etc.) related to the node may be shared by hyperlinking the materials to the node, so that the materials may be shared in real time between the author terminals without using email.

This has an advantage of preventing or eliminating time delays and costs incurred by delivering information or sharing documents via email.

Therefore, according to the present invention, there is an advantage in which the sharing of information on progress and the sharing of various documents is made in a visual and multidimensional manner by collaborating through the map.

Further, the present invention has an advantage in which language barriers may be eliminated and the entire shared concept may be identified at a glance.

Further, the present invention has an advantage in which active participation in a project may be induced, each other's culture may be understood and respected, and learning effect may be improved.

Further, as another example of application, the mind map-based collaboration system and method providing the real-time translation according to the present invention may be utilized in the trade work of an import and export company.

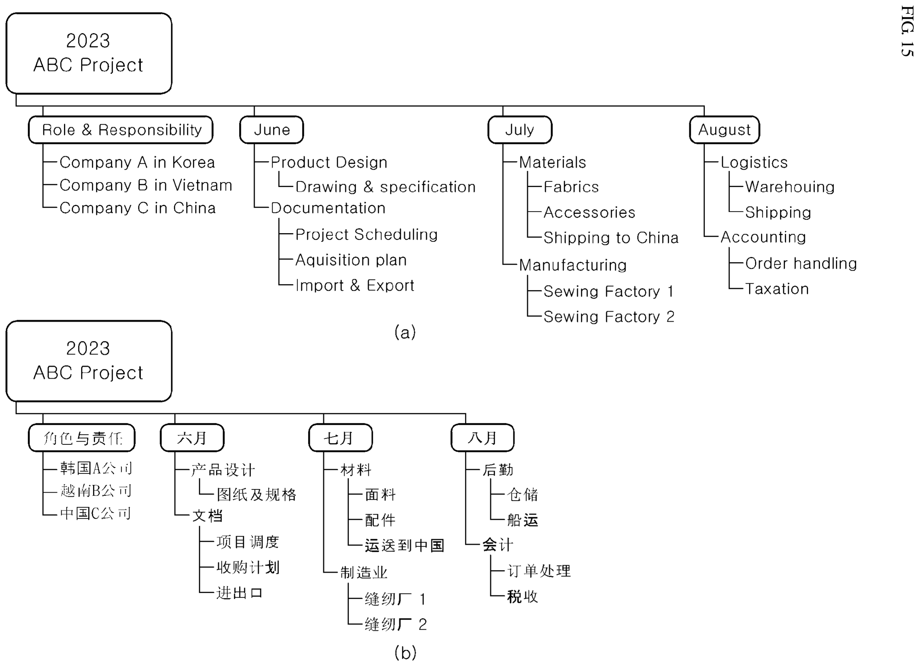

Referring to FIG. 15, the procedure is as follows: ① Company A, a Korean company engaged in import and export of apparel products to and from various countries in Southeast Asia, conducts "Project ABC" with Company B, a Vietnamese company responsible for production of raw materials and auxiliary materials necessary for the fabrication of products and Company C, a Chinese company responsible for the fabrication of finished products. It is important work for Company A to manage time and costs by exchanging relevant documents such as specifications, quotations, customs clearance documents, etc. with Companies B and C via email from time to time and closely sharing the progress. Companies A, B, and C create documents and have wired and wireless conversations using English as an official language for communication.

② In this case, the person in charge of Korean Company A first prepares work items and procedures required for the successful execution of "Project ABC" as a map in the form of a WBS (Work Breakdown Structure) in English if there is a person in charge who can user English as the official language, or in Korean if there is no person in charge who can use English as the official language, and posts or uploads such a map to the cloud.

③ The person in charge of Korean Company A opens a collaboration called "Project ABC" and invites the persons in charge of Companies B and C by forwarding the collaboration link.

④ When the persons in charge of Companies B and C accesses through the collaboration link, the contents of the map prepared by Company A are displayed on the screen in English and Chinese, respectively.

That is, FIG. 15(a) shows the display in English when there is the person in charge who uses English as the official language, and FIG. 15(b) shows the display in common everyday language when there is no person in charge who uses English as the official language.

⑤ As the project progresses, the persons in charge of Companies A, B, and C use their everyday language to ask and answer questions or connect and share necessary documents by dragging and dropping the documents on the map.

This has an advantage of preventing or eliminating time delays and costs incurred by delivering information or sharing documents via email.

Further, the present invention has an advantage in which the sharing of information on progress and the sharing of various documents is made in the visual and multidimensional manner by the online collaboration based on the mind map.

Further, there is an advantage of enabling the communication and the collaboration with other countries without the need for personnel who are fluent in the official language (e.g., English).

The embodiments of the invention described above may be implemented in the form of program instructions executable by various computer components and recorded on a computer-readable recording medium. The computer-readable recording medium may include program instructions, data files, data structures, and the like, singularly or in combination. The program instructions recorded on said computer-readable recording medium may be specifically designed and constructed for the present invention or may be known and available to those skilled in the computer software field. Examples of computer-readable recording media include magnetic media such as hard disks, floppy disks, and magnetic tapes, optical recording media such as CD-ROMs and DVDs, magneto-optical media such as floptical disks, and hardware devices specifically configured to store and execute program instructions, such as ROM, RAM, flash memory, and the like. Examples of program instructions include machine language code, such as that created by a compiler, as well as high-level language code that can be executed by a computer using an interpreter or the like. The hardware device may be changed to one or more software modules to perform processing according to the present invention, and vice versa.

The embodiments described above are provided to facilitate understanding of the technical concepts of the present invention by those skilled in the art, and should not be construed as limiting the invention, and it will be apparent to those having ordinary knowledge in the art that various modifications and variations may be made to the embodiments of the invention without departing from the concepts and scope of the invention. Accordingly, such modifications or variations should be considered to fall within the scope of the claims of the present invention.

### Sequence List Free Text

100: Author Terminal
110: Initiator Terminal
120: Participant Terminal
200: Server
300: Translation or Artificial Intelligence API (application programming interface)

## Claims

1. A mind map-based online collaboration method providing a real-time translation function by using a plurality of author terminals and a server which are connected via a network, the method comprising:
a mind map generation step for generating a mind map according to a collaboration topic via an initiator terminal, which is any one of the plurality of author terminals;
a conference room opening request step for requesting to open a conference room by accessing the server via the initiator terminal, and setting conference room setting information;
a conference room participation step for accessing the server and participating in the conference room after participant authentication, via at least one participant terminal other than the initiator terminal among the plurality of author terminals;
an input step for entering a message for collaboration in a set language by the initiator terminal or the at least one participant terminal participating in the conference room, and transmitting the message to the server; and
an output step for updating and outputting, by the server, a mind map entered by the input step to the initiator terminal or the at least one participant terminal,
wherein when there is the initiator terminal or the at least one participant terminal that sets a language different from the language entered via the input step, the server performs and outputs real-time translation into the different language set by the initiator terminals or the at least one participant terminals, with interacting with a translation API.

2. The method of claim 1, wherein in the output step, the server checks an output mode which is set by the initiator terminal or the at least one participant terminal, and outputs a translated text or an original text according to the output mode.

3. The method of claim 1, wherein the input step inputs a text, and inputs a mind map node by automatically converting a user's voice to the text, instead of inputting the text.

4. The method of claim 1, wherein in the output step, when a mouse hovers over a node of the mind map via the author terminal, the server displays and outputs a name of an author terminal which creates the corresponding node of the mind map, a profile picture, and a language which is used.

5. The method of claim 4, wherein in the output step,
when the mouse hovers over a node of the mind map created by other participant, via any one of the plurality of author terminals, the server displays the node in a language set by the other participant, and
when the node is clicked, the server reads and outputs the node in the corresponding language by interacting with the translation API.

6. The method of claim 1, wherein in the output step, the server allows words or sentences entered in a node created by any one of the plurality of author terminals, to be internet-searched or dictionary-searched by pressing a particular key to identify an actual meaning.

7. The method of claim 1, wherein in the output step, the server assigns a unique color to each user of the plurality of author terminals which participate in an online collaboration mind map, and
when a user is selected from a list of participants, the server displays and outputs a unique color of the user as a background color of a node.

8. The method of claim 1, wherein in the output step, the server numerically indicates and outputs a number of creation and a number of edit by each user in a list of participants such that a degree of participation in online collaboration among the plurality of author terminals is easily recognized.

9. The method of claim 1, wherein in the output step, the server stores data in a mind map format and outputs the data in the mind map format or in a note format by switching an output mode, and
the server converts data in a state displayed on a screen into other file formats and saves the converted data.

10. The method of claim 1, where in the output step, the server outputs a writing of a desired number of pages in cooperation with an artificial intelligence API based on a hierarchical content of the mind map.

11. The method of claim 1, wherein the author terminal transmits a message via chat or whisper to any one of the plurality of author terminals participating in the conference room, and
when the message is received by an author terminal that sets a language different from the language in which the message is entered, the server, in cooperation with the translation API, performs and outputs the real-time translation into the language set by the author terminal receiving the message.

12. The method of claim 1, wherein the server, when saving the mind map after completion of creating the mind map, chronologically stores an order in which all nodes are added, deleted, and edited after collaboration via a collaborative mind map is initiated, and outputs stored data as a video.

13. A mind map-based online collaboration system providing a real-time translation function by using a plurality of author terminals and a server which are connected via a network, the system comprising:
an initiator terminal, which is any one of the plurality of author terminals, the initiator terminal generating a mind map according to a collaboration topic and requesting to open a conference room by accessing the server;
at least one participant terminal, which is other than the initiator terminal among the plurality of author terminals, the at least one participant terminal accessing the server and participating in the conference room after participant authentication; and
a server entering a message for collaboration in a language set by the initiator terminal or the at least one participant terminal participating in the conference room, and updating and outputting an entered mind map to the initiator terminal or the at least one participant terminal,
wherein when there is the initiator terminal or the at least one participant terminal that sets a language different from the entered language, the server performs and outputs real-time translation into the different language set by the initiator terminals or the at least one participant terminals, with interacting with a translation API.

14. The system of claim 13, wherein the server checks an output mode which is set by the initiator terminal or the at least one participant terminal, and outputs a translated text or an original text according to the output mode.

15. The system of claim 13, wherein when the message for the collaboration is entered into the server, the initiator terminal or the at least one participant terminal inputs a text, and inputs a mind map node by automatically converting a user's voice to the text, instead of inputting the text.

16. The system of claim 13, wherein when a mouse hovers over a node of the mind map via the author terminal, the server displays and outputs a name of an author terminal which creates the corresponding node of the mind map, a profile picture, and a language which is used,.

17. The system of claim 16, wherein when the mouse hovers over a node of the mind map created by other participant, via any one of the plurality of author terminals, the server displays the node in a language set by the other participant, and
when the node is clicked, the server reads and outputs the node in the corresponding language by interacting with the translation API.

18. The system of claim 13, wherein the server allows words or sentences entered in a node created by any one of the plurality of author terminals, to be internet-searched or dictionary-searched by pressing a particular key to identify an actual meaning.

19. The system of claim 13, wherein the server assigns a unique color to each user of the plurality of author terminals which participate in an online collaboration mind map, and
when a user is selected from a list of participants, the server displays and outputs a unique color of the user as a background color of a node.

20. The system of claim 13, wherein the server numerically indicates and outputs a number of creation and a number of edit by each user in a list of participants such that a degree of participation in online collaboration among the plurality of author terminals is easily recognized.

21. The system of claim 13, wherein the server stores data in a mind map format and outputs the data in the mind map format or in a note format by switching an output mode, and
the server converts data in a state displayed on a screen into other file formats and saves the converted data.

22. The system of claim 13, where the server outputs a writing of a desired number of pages in cooperation with an artificial intelligence API based on a hierarchical content of the mind map.

23. The system of claim 13, wherein the author terminal transmits a message via chat or whisper to any one of the plurality of author terminals participating in the conference room, and
when the message is received by an author terminal that sets a language different from the language in which the message is entered, the server, in cooperation with the translation API, performs and outputs the real-time translation into the language set by the author terminal receiving the message.

24. The system of claim 13, wherein the server, when saving the mind map after completion of creating the mind map, chronologically stores an order in which all nodes are added, deleted, and edited after collaboration via a collaborative mind map is initiated, and outputs stored data as a video.
